# DEMANDE DE BREVET EUROPEEN

(11) **EP 2 241 971 A2**
(43) Date de publication de la demande: **20.10.2010**
(21) Numéro de dépôt: 10160090.6
(22) Date de dépôt: 15.04.2010
(51) Int. Cl.: G06F 9/44

(54) **Procédé permettant de simplifier la programmation d'un logiciel**

(30) Priorité: 17.04.2009 FR 0952534
(71) Demandeur: France Telecom, 75015 Paris (FR)
(72) Inventeur: Le Merrer, Pascal, 35530, NOYAL SUR VILAINE (FR)

(57) **Abrégé**

Procédé d'aide à la programmation d'un logiciel comprenant une étape d'affichage d'une zone de description (Z1) utilisée pour afficher une description graphique d'au moins une action à exécuter par ledit logiciel suite à une occurrence d'au moins un événement; au moins une étape d'affichage, dans une zone de commande (Z2), d'au moins un élément d'interface (BE, BA, L1, L2, L3) au moyen duquel il est proposé à un utilisateur de procéder à une opération de description de ladite action ou dudit événement entraînant une mise à jour de ladite description graphique; l'opération de description couramment proposée étant chaque fois dépendante de la dernière opération de description effectuée, de manière à inciter l'utilisateur à définir ledit logiciel selon une succession prédéfinie d'opérations de description.

## Description

L'invention concerne le domaine de l'informatique et plus précisément un procédé d'aide à la programmation d'un logiciel ainsi qu'un dispositif associé.

La programmation de logiciel est une tâche complexe, qui requiert un apprentissage conséquent. La majorité des langages de programmation utilisent un langage sous forme de texte avec syntaxe spécifique à ce langage. Toutefois il existe des langages graphiques qui permettent de réduire la complexité de la programmation, au détriment cependant de la puissance d'expression du langage. Les langages graphiques présentent l'intérêt de supprimer ou fortement réduire l'apprentissage de la syntaxe du langage, et évitent les erreurs de syntaxe. Ils sont donc bien adaptés à un public néophyte en matière de programmation.

Toutefois l'utilisateur doit toujours apprendre la logique de la programmation. Il doit également découvrir l'ensemble des instructions mises à sa disposition par ce langage graphique, avec leur signification, et savoir quand utiliser chacune d'elle. La signification des instructions d'un langage graphique, même si elles peuvent être plus explicites que celle d'un langage de programmation traditionnel, n'est pas toujours intuitive.

Il apparaît donc un besoin pour un système d'aide à la programmation d'un logiciel, qui rende plus simple et plus rapide la création d'un programme, notamment qui réduise la phase d'apprentissage requise de la part de l'utilisateur.

Un des buts de l'invention est de remédier à des problèmes, inconvénients ou insuffisances de l'état de la technique et/ou d'y apporter des améliorations.

L'invention concerne, selon un premier aspect, un procédé d'aide à la programmation d'un logiciel comprenant :
- une étape d'affichage d'une zone de description utilisée pour afficher une description graphique d'au moins une action à exécuter par ledit logiciel suite à une occurrence d'au moins un événement,
- au moins une étape d'affichage, dans une zone de commande, d'au moins un élément d'interface au moyen duquel il est proposé à un utilisateur de procéder à une opération de description de ladite action ou dudit événement entraînant une mise à jour de ladite description graphique,
l'opération de description couramment proposée étant chaque fois dépendante de la dernière opération de description effectuée, de manière à inciter l'utilisateur à définir ledit logiciel selon une succession prédéfinie d'opérations de description.

L'utilisateur est guidé pas à pas pour la description du logiciel : il n'a donc qu'à procéder à l'opération de description chaque fois proposée pour aboutir à une description complète de son logiciel. L'ordre proposé pour les opérations de description étant prédéfini, la tâche de l'utilisateur est considérablement simplifiée.

Selon un mode de réalisation du procédé selon l'invention, en cas de détection d'une sélection d'un élément graphique effectuée par un utilisateur dans la zone de description, l'opération de description proposée est fonction de l'élément graphique sélectionné. L'invention laisse à l'utilisateur, à tout instant, la possibilité de modifier un élément graphique présent dans la description du logiciel ou une partie déterminée de cette description.

Selon un mode de réalisation du procédé selon l'invention, la zone de description comprend une zone de description de ladite action, l'opération de description proposée étant, lorsque la zone de description de ladite action est sélectionnée par un utilisateur, un ajout d'une action devant être exécutée avant ou après ladite action. L'utilisateur est ainsi incité à exécuter une opération de description en rapport avec la partie de zone de description sélectionnée: il est ainsi guidé pas à pas selon une certaine logique de description, ce qui facilite considérablement son travail et rend inutile une phase d'apprentissage.

Selon un mode de réalisation du procédé selon l'invention, la zone de description comprend une zone de description dudit événement, l'opération de description proposée étant, lorsque la zone de description dudit événement est sélectionnée par un utilisateur, un ajout d'un autre événement ou un ajout d'une action associé audit événement. Là encore l'utilisateur est guidé pas à pas selon une certaine logique de description, ce qui facilite considérablement son travail et rend inutile une phase d'apprentissage.

Selon un mode de réalisation du procédé selon l'invention, l'opération de description couramment proposée est une opération de description ayant déjà été proposée à l'utilisateur mais n'ayant pas été effectuée par l'utilisateur, le procédé comprenant une étape pour signaler à un utilisateur qu'une opération de description proposée n'a pas été effectuée. L'utilisateur est ainsi averti de ses omissions de manière, là encore, à inciter l'utilisateur à définir le logiciel selon une succession prédéfinie d'opérations de description.

Selon un autre mode de réalisation, le procédé selon l'invention comprend en outre une étape de sélection automatique d'un élément graphique de la zone de description concerné par l'opération de description proposée. L'utilisateur est ainsi informé clairement sur la partie du logiciel qui est en cours de description.

Selon encore un autre mode de réalisation du procédé selon l'invention, ledit logiciel est susceptible d'être décrit à partir d'objets représentant une dite action ou un dit événement, l'opération de description couramment proposée est l'une des opérations comprise dans le groupe comprenant:
- ajout d'un objet,
- choix d'un type d'objet pour un objet à créer,
- définition d'un paramètre pour un objet créé.

Du fait de ce choix limité à une opération de description élémentaire, l'utilisateur est guidé et ne risque pas d'effectuer la description du logiciel dans un ordre quelconque, inapproprié ou d'oublier une opération de description.

Selon encore un autre mode de réalisation du procédé selon l'invention, lorsque l'opération de description couramment proposée consiste à choisir un type d'objet, une liste d'éléments d'interface utilisateur associés chacun à un type d'objet est affichée lors de l'étape d'affichage. Ceci simplifie le travail de l'utilisateur qui n'a qu'un choix à faire dans la liste proposée, sans avoir à se poser de question de la compatibilité entre l'objet à créer et les types d'objets proposés.

Les différents modes de réalisation mentionnés ci-dessus sont combinables entre eux pour la mise en oeuvre de l'invention.

L'invention concerne, selon un deuxième aspect, un dispositif d'aide à la programmation d'un logiciel comprenant
- des moyens d'affichage d'une zone de description utilisée pour afficher une description graphique d'au moins une action à exécuter par ledit logiciel suite à une occurrence d'au moins un événement,
- des moyens d'affichage, dans une zone de commande, d'au moins un élément d'interface au moyen duquel il est proposé à un utilisateur de procéder à une opération de description de ladite action ou dudit événement entraînant une mise à jour de ladite description graphique,
l'opération de description couramment proposée étant chaque fois dépendante de la dernière opération de description effectuée, de manière à inciter l'utilisateur à définir ledit logiciel selon une succession prédéfinie d'opérations de description.

Les avantages énoncés pour le procédé selon l'invention sont transposables directement au dispositif selon l'invention.

Plus généralement, le dispositif selon l'invention comprend des moyens de mise en oeuvre des étapes du procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un terminal et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un exemple d'une interface utilisateur utilisée dans la mise en oeuvre du procédé selon l'invention;
- la figure 2 représente un organigramme d'un mode de réalisation du procédé selon l'invention;
- les figures 3A à 3H représentent de manière schématique des exemples de modification de l'interface utilisateur utilisée dans la mise en oeuvre du procédé selon l'invention, lors des différentes étapes représentées à la figure 2.

Le procédé selon l'invention est destiné à être mis en oeuvre au moyen d'un logiciel exécuté sur un terminal d'un utilisateur, par exemple un terminal de type ordinateur personnel, comprenant une unité centrale, un écran d'affichage, un clavier et une souris, en tant qu'outil de pointage. Un tel terminal est un exemple de dispositif selon l'invention.

Le dispositif selon l'invention est réalisé par exemple sous forme de terminal ou d'ordinateur personnel, doté de moyens d'affichage (typiquement un écran), de moyens (typiquement un processeur) d'exécution des étapes du procédé selon l'invention et d'un support d'enregistrement lisible par un processeur de données, sur lequel est enregistré un programme comprenant des instructions de code de programme pour l'exécution des étapes du procédé selon l'invention.

Les principes de l'invention sont décrit dans le contexte de la création d'un module logiciel de type "widget" ou "gadget logiciel", c'est-à-dire d'un composant logiciel graphique, destiné à être affiché sur un écran d'ordinateur et qui permet d'obtenir des services ou des informations. Un tel module logiciel est conçu pour déclencher une exécution d'au moins une action suite à une occurrence d'au moins un événement.

Un module logiciel ou composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions.

Le module logiciel est décrit au moyen d'un langage graphique, comprenant un ensemble d'instructions graphiques, c'est-à-dire d'instructions représentées à l'aide d'éléments graphiques (symboles, formes géométriques, flèches, etc.), combinés éventuellement à du texte. Ces instructions servent à décrire à la fois le ou les objets intervenant dans l'exécution du module logiciel, ainsi que le ou les paramètres de ces objets. Par description graphique, on entend donc ici une description au moyen d'un langage graphique.

Pour décrire le module logiciel, différents objets sont utilisés. Un objet est par exemple un événement ou une action.

Un événement définit à quel moment la ou les actions associées doivent être exécutées, en relation par exemple avec des mouvements d'un curseur matérialisant sur l'écran d'affichage les déplacements de l'outil de pointage (souris typiquement) ou les sélections effectuées par cet utilisateur au moyen de cet outil de pointage, par exemple:
- quand le curseur survole un composant graphique prédéfini;
- quand le curseur quitte un composant graphique prédéfini;
- quand l'utilisateur clique sur un composant graphique prédéfini;
- quand la valeur d'une propriété d'un composant graphique prédéfini change.

A chacun de ces moments est associé un type d'événement ou ensemble d'événements possibles: par exemple, le type d'événement "quand le curseur survole un composant graphique prédéfini" correspond à un ensemble d'événements comprenant autant d'événements que de composants graphiques susceptibles d'être survolés: un premier événement EA correspondant au survol d'un premier composant graphique A, un deuxième événement EB correspondant au survol d'un deuxième composant graphique B, etc.

Une action est un traitement effectué au cours de l'exécution du module logiciel. Tout type de traitement est envisageable, par exemple :
- afficher un texte et/ou une image,
- envoyer un message,
- ouvrir un fichier,
- copier une information,
- effectuer un calcul.

On suppose dans le contexte de ce document, qu'un événement ne peut être décrit relativement à un autre événement. Par contre, une action peut être décrite relativement à d'autres actions: on est dans ce cas en présence d'actions imbriquées les unes dans les autres. Ceci est utile par exemple pour définir une fonction de calcul complexe par imbrication de fonctions de calcul élémentaires les unes dans les autres.

La plupart des événements et actions sont définis au moyen d'un ou plusieurs paramètres, qui permettent de rendre dynamique le comportement de ces événement ou actions au cours de l'exécution du module logiciel.

Par exemple:
- l'événement "quand l'utilisateur clique sur un composant graphique prédéfini" doit être défini en fonction d'un paramètre qui identifie le composant graphique pour lequel une détection est à faire;
- une action d'envoi d'un message SMS (Short Message Service) doit être définie en fonction d'au moins deux paramètres: le texte à envoyer et le numéro de téléphone du destinataire.

Les paramètres d'un événement ou d'une action peuvent être définis:
- soit par une fonction de calcul, qui fournit une valeur définie lors de l'exécution du module logiciel (par exemple le texte contenu dans un champ de saisie, le résultat d'un calcul...);
- soit par une valeur fixe, définie lors de la programmation : dans ce cas cela signifie que la valeur du paramètre ne changera pas au cours de l'exécution du module logiciel.

Les paramètres ont un type qui définit la nature du paramètre : chaîne de caractère, valeur numérique, booléen, date, heure, adresse email, identifiant de composant graphique, etc.

Une action requiert des paramètres qui sont:
- soit d'un type donné : par exemple le paramètre "destinataire" d'une action d'envoi de SMS est nécessairement de type "numéro de téléphone"
- soit d'un type variable: le paramètre "texte" d'une action d'envoi de SMS peut aussi bien contenir un texte, qu'une URL, une valeur numérique...

Selon l'invention, l'utilisateur est guidé pas à pas lors de la programmation du module logiciel. On nomme ci-après "assistant" le logiciel d'aide à la programmation.

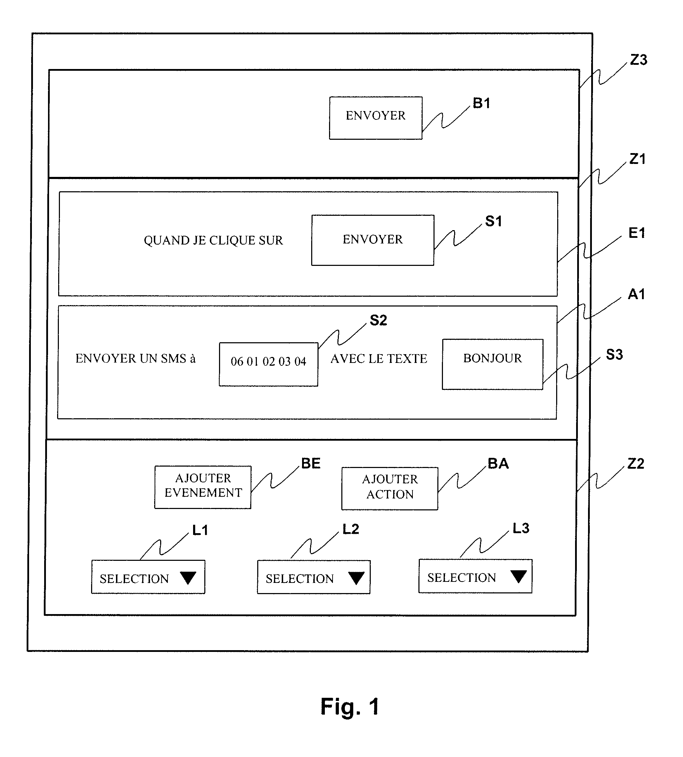

L'assistant met en oeuvre une interface utilisateur appropriée, dont un exemple est représenté à la figure 1. Cette interface utilisateur comprend principalement trois zones:
- une première zone Z1 pour l'affichage de la description du module logiciel, voire d'une partie de ce module logiciel (par exemple, la description d'un événement ou d'une action), cette description graphique étant composée d'instructions graphiques; cette première zone est nommée zone de description Z1;
- une deuxième zone Z2 pour l'affichage d'éléments d'interface sélectionnables par l'utilisateur pour commander une mise à jour (modification d'au moins un élément, ajout ou suppression d'au moins un élément) de la description graphique du module logiciel, cette modification entraînant une modification de la description graphique affichée dans la zone de description Z1; cette deuxième zone est nommée zone de commande Z2;
- une troisième zone Z3 pour l'affichage de l'interface utilisateur du module logiciel à programmer, comprenant une représentation graphique des éléments d'interface utilisés dans ce module logiciel; cette troisième zone est nommée zone de dessin Z3.

La zone de dessin Z3 comprend un élément d'interface B1 de type "bouton" à cliquer, représentant un élément sélectionnable du module logiciel à programmer, qui dans l'exemple décrit ici, est destiné à être utilisé pour déclencher l'envoi d'un message SMS (Short Message Service) à un destinataire prédéfini.

La zone de description Z1 comprend une zone E1 dédiée à la description graphique d'un événement, associé au bouton B1, en l'occurrence d'un événement de type "quand l'utilisateur clique sur un composant graphique prédéfini". La description graphique de cet événement comprend, d'une part, un texte ("quand je clique sur") et, d'autre part, une zone S1 de saisie d'un paramètre de cet événement, cette zone S1 étant destiné à recevoir un identifiant d'un élément graphique de la zone de dessin Z3, en l'occurrence l'identifiant du bouton B1.

La zone de description Z1 comprend une zone A1 dédiée à la description graphique d'une action, associée au bouton B1, et destinée à être déclenchée lorsque l'événement décrit dans la zone E1 se produit. La description graphique de cette action comprend, d'une part, du texte ("envoyer un SMS à" et "comprenant le texte") et, d'autre part, une zone S2 de saisie d'un premier paramètre de cette action, pour recevoir un numéro de téléphone du destinataire du SMS, ainsi qu'une zone S3 de saisie d'un premier paramètre de cette action pour recevoir le texte du SMS à envoyer.

Les éléments d'interface affichés dans la zone de commande Z2 sont utilisés pour commander des mises à jour de la description graphique du module logiciel telle qu'affichée dans la zone de description Z1. Un tel élément d'interface est soit un élément d'interface sous forme de liste pour commander une sélection d'un type d'objet, soit un élément d'interface, sous forme de "bouton" à cliquer ou lien hypertexte, pour commander un ajout d'objet.

La zone de commande Z2 comprend par exemple:
- un élément d'interface BE, sous forme de bouton à cliquer, pour commander l'ajout d'un événement;
- un élément d'interface BA, sous forme de bouton à cliquer, pour commander l'ajout d'une action;
- un élément d'interface L1, sous forme de liste de sélection d'un type d'événement, servant à définir un événement;
- un élément d'interface L2, sous forme de liste de sélection d'un type d'action, servant à définir une action;
- un élément d'interface L3, sous forme de liste de sélection d'une fonction de calcul de paramètre, servant à définir un paramètre.

Un élément d'interface sous forme de liste permet de commander une sélection d'un type d'objet, par exemple une sélection d'un type d'événement, d'un type d'action, d'un type de paramètre, d'une fonction de calcul de paramètre, d'un composant graphique parmi ceux définis pour le module logiciel, etc.

Dans le cas de la sélection d'une action dans une liste d'actions, les actions peuvent être regroupées en catégories selon des critères variés : type d'action effectuée, nature de l'objet de l'action, etc. Dans ce cas, l'assistant peut présenter des boutons qui déclenchent chacun l'affichage d'une liste des actions d'une seule catégorie, plutôt que de lister directement toutes les actions possibles. Par exemple : l'assistant affiche un bouton nommé « Modifier un composant graphique...» : un clic sur ce bouton fait apparaître toutes les actions qui permettent de modifier l'état ou l'aspect d'un des composants graphiques de l'application, comme « masquer un composant graphique », « afficher un composant graphique », «modifier l'abscisse d'un composant graphique », «modifier la couleur d'un composant graphique », etc... Cette organisation simplifie la recherche d'une instruction donnée par l'utilisateur lorsque le langage de programmation offre de nombreuses possibilités.

Lors de la sélection d'une fonction de calcul d'un paramètre, seules les fonctions du type requis par le paramètre à définir pour l'action ou l'événement sont présentées à l'utilisateur, de façon à éviter le choix d'une fonction incompatible avec le paramètre à définir.

Dans une variante de réalisation de l'invention, une liste de fonctions plus complète est proposée à l'utilisateur, cette liste comprenant non seulement les fonctions qui fournissent une valeur du type requis par le paramètre à définir, mais également des fonctions qui fournissent une valeur susceptible d'être convertie dans le type requis. Dans cette variante, un bouton (ou autre élément d'interface) est utilisé pour déclencher l'affichage de la liste complète des fonctions. Par exemple : si le paramètre attendu est de type "texte", on n'affichera dans un premier temps que les fonctions qui fournissent une valeur de ce type. Puis après un clic sur le bouton, la liste des fonctions sera complétée par celles qui renvoient une date, une valeur numérique, une URL, une adresse email... ou tout autre type de valeur qui sera converti en texte lors de l'exécution du programme. L'avantage de cette variante est de simplifier l'utilisation dans les cas les plus fréquents, sans pour autant restreindre les possibilités offertes à l'utilisateur.

Pour la définition d'un paramètre de type identifiant de composant graphique, il peut être proposé à l'utilisateur, outre la sélection dans une liste de composants graphiques, une sélection dans la zone de dessin Z3 du composant graphique à prendre en compte.

Le libellé de chacun des éléments d'une liste affichée dans la zone de commande Z2 peut différer de celui qui figure dans l'instruction graphique de la description de l'objet qui sera affichée, après sélection, dans la zone de description Z1. Cela permet d'utiliser des libellés plus explicites que ceux des instructions graphiques, qui peuvent parfois être limités pour des considérations d'ordre esthétique ou pratique (notamment problème de taille de l'instruction graphique).

La zone de commande Z2 est également utilisée pour afficher des messages d'aide, afin notamment d'expliquer à l'utilisateur ce qui est attendu de lui à chaque étape de la description du module logiciel. La zone de commande Z2 est également utilisée pour afficher des messages d'erreur ou avertissement.

L'assistant propose des opérations de description déterminées en fonction de la sélection courante de la zone de description Z1, que cette sélection soit le résultat d'une sélection manuelle, requise par l'utilisateur (en général, par un clic ou double clic de souris), ou d'une sélection automatique, effectuée autoritairement par l'assistant. De manière connue, on entend par sélection courante l'élément graphique de l'interface utilisateur couramment sélectionné (cet élément étant affiché en général avec une apparence différente de celle utilisée lorsque cet élément n'est pas sélectionné), c'est-à-dire celui qui dont l'action associée sera exécutée si l'utilisateur valide cette sélection (en général, par appui sur la touche "entrée") de son clavier ou celui dans lequel seront saisis les caractères tapés par l'utilisateur sur le clavier de son ordinateur.

L'utilisateur est informé des opérations proposées par l'assistant au moyen de la zone de commande Z2, par affichage dans cette zone du ou des éléments d'interfaces associés à un jeu restreint de commandes de modification de la description affichée dans la zone Z1. En particulier, les éléments d'interface BE, BA, L1, L2, L3, effectivement affichés et activables sont uniquement ceux nécessaires et suffisants pour la mise en oeuvre d'une opération de description prédéfinie, les autres n'étant pas affichés ou n'étant pas activables.

Outre les commandes déclenchées à partir de la zone de commande Z2, l'utilisateur a la possibilité de saisir, dans des zones de saisies S1, S2, S3 de la zone de description Z1, une ou des fonctions de calcul de paramètre ou une valeur de paramètre, sous forme généralement de chaîne de caractères alphanumériques. La saisie d'une valeur de paramètre s'effectue au moyen d'un éditeur approprié, associé au champ de saisie, dont la nature dépend du type de paramètre à saisir (ex : un calendrier pour saisir une date). Cela permet d'éviter une erreur de format lors de la saisie ou le formatage de la valeur saisie.

Après chaque saisie (zone Z1) ou choix (zone Z2) effectué par l'utilisateur, l'assistant modifie automatiquement la sélection courante de la zone de description Z1 et donc les choix proposés à l'utilisateur dans la zone de commande Z2. L'utilisateur est ainsi guidé pas à pas dans la conception de son programme.

L'utilisateur a également la possibilité de sélectionner un élément d'interface de la zone de dessin Z3, par exemple un bouton B1: dans ce cas des outils de dessins sont affichés dans la zone de commande Z2 pour permettre à l'utilisateur de modifier l'apparence et/ou l'emplacement des éléments d'interface.

L'utilisateur a en outre la possibilité de sélectionner manuellement soit la zone de description Z1 elle-même, soit une zone E1 ou A1 de description d'un événement ou d'une action, soit une zone S1, S2, S3 de saisie de paramètre. Là encore, les choix de commande proposés par l'assistant à l'utilisateur à travers la zone de commande Z2 sont limités en fonction du contexte, c'est-à-dire soit de l'état de zone de description, soit de la sélection courante résultant de cette sélection manuelle.

Le tableau ci-dessous liste le ou les choix proposés à l'utilisateur.

| Contexte | Choix proposé(s) par l'assistant |
|---|---|
| La zone de description Z1 est vide ou sélectionnée | Ajout d'un événement |
| Une zone E1 de description d'un événement est sélectionnée | Ajout d'un événement |
| | Ajout d'une action associé à l'événement considéré |
| Une zone A1 de description d'une action est sélectionnée | Ajout d'une action devant être exécutée avant celle qui est sélectionnée |
| | Ajout d'une action devant être exécutée après celle qui est sélectionnée |
| Une zone de saisie S1 d'un paramètre de type 'identifiant d'un composant graphique' est sélectionnée | Sélection d'un composant graphique dans la zone de dessin Z3 et/ou sélection d'un composant graphique dans une liste de composants |
| Une zone de saisie S1 d'un paramètre d'un autre type est sélectionnée | Définition dudit paramètre: par saisie d'une valeur ou par sélection d'une fonction dans une liste de fonctions compatible avec le type du paramètre |

Plus précisément, l'assistant est conçu pour proposer automatiquement à l'utilisateur une succession d'opérations élémentaires de description du module logiciel, l'opération proposée à un instant donné étant fonction de la dernière opération effectuée par l'utilisateur: cette dernière opération étant soit une sélection(d'une zone de description E1, A1 ou d'une zone de saisie S1, S2, S3) effectuée manuellement par l'utilisateur, soit une opération de description, c'est-à-dire des saisies et/ou choix effectués par l'utilisateur au cours de la dernière opération de description. L'assistant fonctionne donc selon un processus qui est itératif: un choix ou saisie déterminant l'opération de description suivante, qui elle-même détermine les choix et/ou saisies possibles lors de l'opération de description courante. La succession des opérations de description est donc contrôlée et fixée par l'assistant, seules les sélections manuelles pouvant modifier cet ordre.

L'assistant affiche à un instant donné un nombre limité de choix possibles par rapport à ceux qui seraient disponibles si l'utilisateur était libre de décrire les événements, actions et paramètres dans l'ordre qu'il voulait, de manière à inciter l'utilisateur à procéder à la description du module logiciel selon une succession prédéfinie d'opérations de description.

Les choix proposés et/ou sélections effectuées automatiquement par l'assistant suite à une opération de description sont les suivants.

Après ajout d'un nouvel objet (événement ou action) et sélection d'un type d'objet dans une liste de type d'objet, l'assistant détermine si cet objet requiert un paramètre. Dans l'affirmative, l'assistant sélectionne automatiquement la zone de saisie S1 du premier paramètre et propose une liste de fonctions de calcul de paramètre compatibles avec ce premier paramètre. Dans la négative, l'assistant sélectionne automatiquement la zone de description (E1, A1) de l'objet considéré.

Après définition d'un paramètre d'un objet (événement ou action), l'assistant détermine si cet objet requiert un autre paramètre. Dans l'affirmative, l'assistant sélectionne automatiquement la zone de saisie S1 de cet autre paramètre et propose une liste de fonctions de calcul de paramètre compatibles avec cet autre paramètre. Dans la négative, l'assistant sélectionne automatiquement la zone de description (E1, A1) de l'objet considéré.

Lorsque l'assistant a sélectionné automatiquement une zone de saisie d'un paramètre d'un objet (événement ou action), l'utilisateur a la possibilité de sélectionner une zone de saisie d'un autre paramètre de ce même objet afin de définir cet autre paramètre. L'utilisateur peut en outre, s'il le souhaite, sélectionner un élément graphique affiché dans la zone de description Z2 en vue de procéder à la modification / mise à jour d'une partie de la description comprenant cet élément graphique. Les opérations de définitions proposées à l'utilisateur sont dans ce cas fonctions de l'élément graphique sélectionné et sont celles définies dans le tableau ci-dessous.

Lorsque l'assistant a sélectionné automatiquement une zone de description d'un objet (événement ou action), l'utilisateur a la possibilité de procéder à un ajout d'objet,

(ajout d'événement et/ou ajout d'action) selon ce qui est décrit dans le tableau ci-dessus en cas de sélection manuelle d'une zone de description d'un objet.

Grâce à l'invention, les problèmes de syntaxe dans la description d'une action ou d'un événement sont entièrement pris en charge par l'assistant, par affichage dans la zone de description Z1 d'une description graphique de l'action ou de l'événement qui limite le travail de l'utilisateur à un travail de sélection et/ou un travail de saisie de paramètre.

Ce mode de programmation permet de mettre en oeuvre fonction de validation de la description afin notamment de signaler à l'utilisateur d'éventuelles erreurs ou omissions, telles que :
- l'absence d'événement,
- l'absence d'action associée à un événement,
- l'absence d'un paramètre.

Dans le cas de l'absence d'un paramètre, le type attendu et la façon de compléter le paramètre sont indiqués à l'utilisateur de façon à le guider là encore.

Le principe de l'invention empêche l'utilisateur de choisir ou saisir un paramètre d'un type incorrect, il ne peut donc y avoir d'erreur lié au type.

De plus, l'assistant, ayant connaissance d'une succession prédéfinie d'opérations de description requises, est en mesure de signaler à l'utilisateur qu'une opération de description proposée n'a pas été effectuée par l'utilisateur. Ceci peut se produire si l'utilisateur décide par exemple de modifier un élément graphique de la description affichée dans la zone de description Z2 et sélectionne cet élément graphique. Dans ce cas, l'assistant mémorise quelle était l'opération de description proposée au moment de cette sélection et proposera à nouveau à l'utilisateur d'effectuer cette opération de description lorsque la modification de l'élément graphique considéré sera exécutée.

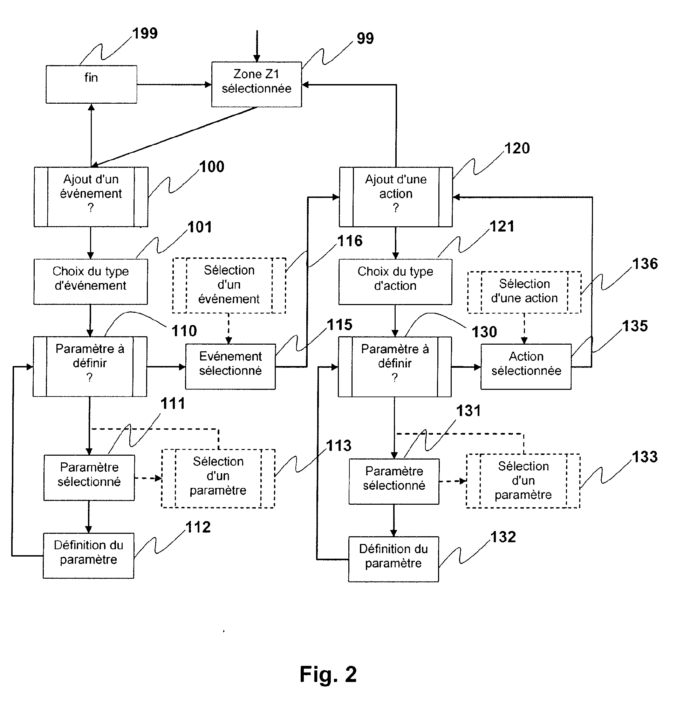

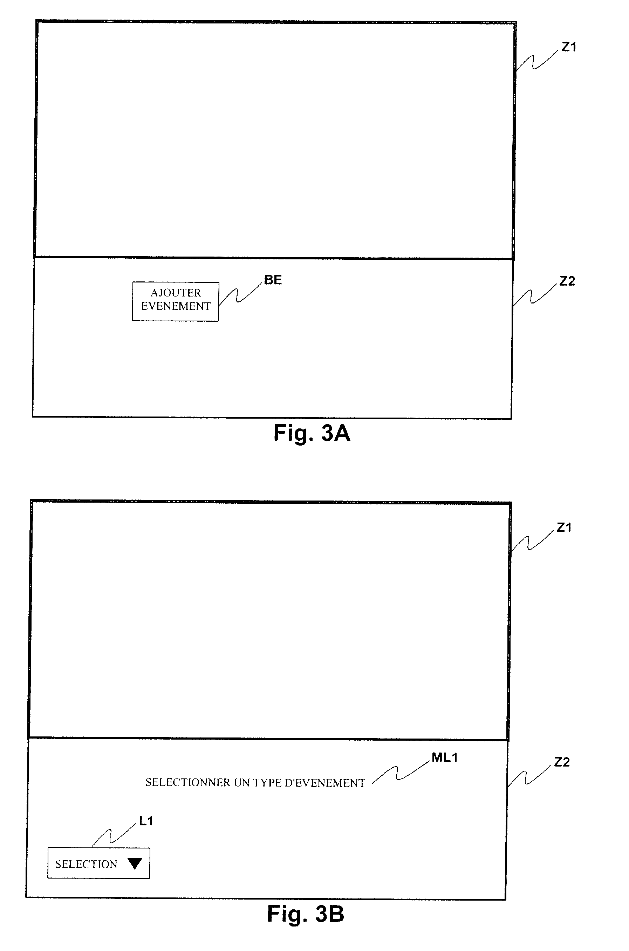

Un exemple de succession d'opérations de description est décrit par référence à la figure 2 (étapes du procédé selon l'invention mises en oeuvre par l'assistant) et aux figures 3A à 3H, représentant l'évolution des zones Z1 et Z2 au cours de l'exécution de ces étapes.

Le procédé selon l'invention démarre à l'étape 99, au cours de laquelle l'assistant sélectionne automatiquement la zone de description Z1. Les zones Z1 et Z2 ont l'apparence représentée à la figure 3A: la zone de description Z1 est sélectionnée

(mise en relief avec un contour en trait plus épais) et la zone de commande Z2 comprend un élément d'interface BE d'ajout d'un événement. L'opération de description imposée à l'utilisateur est donc une opération de description d'ajout d'un événement, puis de description d'un événement, conformément aux étapes 101 à 115. Cette opération de description comprend elle-même des opérations de description élémentaires :
- une opération élémentaire (voir étape 101) de sélection d'un type d'événement parmi ceux proposés, l'utilisateur ne pouvant, à ce stade, effectuer aucune autre opération de description sauf à sélectionner un élément graphique de la zone de description Z2, puis,
- une opération élémentaire (voir étapes 111 à 115) de définition du ou des éventuels paramètres de l'événement pour lequel un type a été sélectionné à l'étape 101, l'utilisateur ne pouvant, à ce stade, effectuer aucune autre opération de description sauf à sélectionner un élément graphique de la zone de description Z2.

A l'étape 100, l'assistant détecte si l'utilisateur clique sur l'élément d'interface BE. Dans l'affirmative, l'étape 101 est exécutée, sinon c'est l'étape 199 finale qui est exécutée. On suppose ici que l'utilisateur clique sur l'élément d'interface BE.

A l'étape 101, les zones Z1 et Z2 ont l'apparence représentée à la figure 3B: la zone de description Z1 est toujours sélectionnée et la zone de commande Z2 comprend l'élément d'interface L1 de sélection d'un type d'événement, accompagné d'un message ML1 pour inviter l'utilisateur à sélectionner un type d'événement. Lors de cette étape 101, l'utilisateur doit donc choisir un type d'événement et ne peut effectuer aucune autre opération de description. On suppose ici que l'utilisateur choisit lors de l'étape 101 un événement du type "quand je clique sur un composant d'interface".

A l'étape 110, l'assistant détermine s'il reste à définir un paramètre pour l'événement en cours de définition (celui dont le type a été sélectionné à l'étape 101). Dans l'affirmative, l'étape 111 est exécutée, sinon l'étape 115 est exécutée.

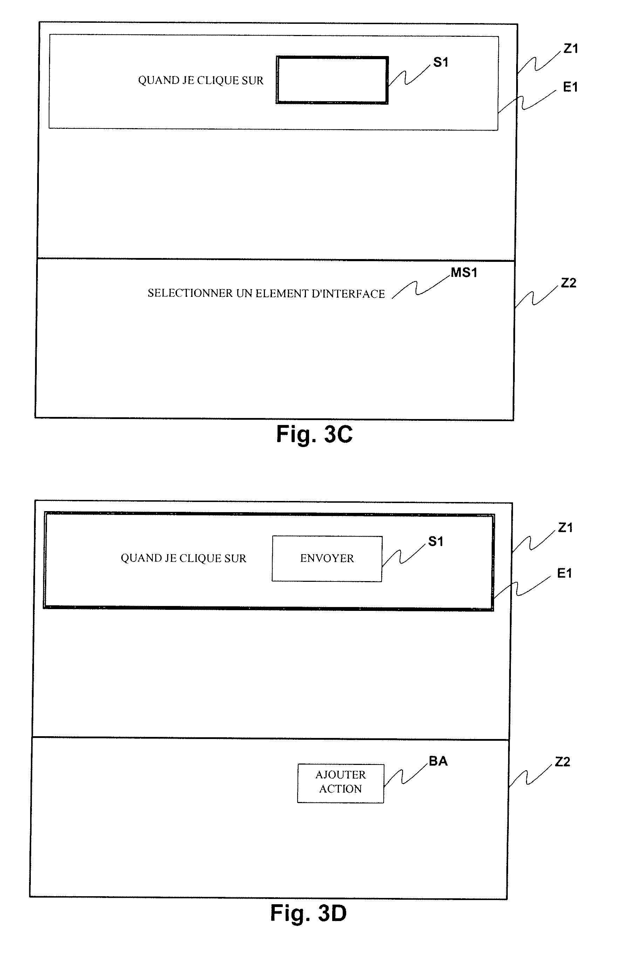

A l'étape 111, les zones Z1 et Z2 ont l'apparence représentée à la figure 3C: une zone de description E1 correspondant à l'événement choisi à l'étape 101 est affichée dans la zone Z1, une zone de saisie S1 associée au premier paramètre de cet événement étant sélectionnée (mise en relief avec un contour en trait plus épais). Ce premier paramètre étant destiné à recevoir un identifiant de composant graphique, la zone de commande Z2 comprend un message MS1 pour inviter l'utilisateur à sélectionner un composant graphique dans la zone de dessin Z3, ayant l'apparence représentée à la figure 1.

A l'étape 112, l'utilisateur définit le premier paramètre sélectionné, en sélectionnant le bouton B1.

L'assistant exécute à nouveau l'étape 110, et aucun autre paramètre ne devant être défini pour l'événement en cours de définition, c'est l'étape 115 qui est exécutée suite à cette étape 110.

A l'étape 115, l'assistant sélectionne l'événement qui vient d'être défini. Les zones Z1 et Z2 ont alors l'apparence représentée à la figure 3D: la zone de description E1 correspondant à l'événement considéré est mise en relief (affichée avec un contour en trait plus épais), la zone de commande Z2 comprenant un élément d'interface BA d'ajout d'action. L'opération de description imposée à l'utilisateur à ce stade est donc une opération d'ajout d'une action, suivie d'une opération de description d'une action, correspondant aux étapes 120 à 135. Cette opération de description comprend elle-même deux opérations élémentaires :
- une opération élémentaire (voir étape 121) de sélection d'un type d'action parmi ceux proposés, l'utilisateur ne pouvant, à ce stade, effectuer aucune autre opération de description sauf à sélectionner un élément graphique de la zone de description Z2, puis,
- une opération élémentaire (voir étapes 131 à 135) de définition du ou des éventuels paramètres de l'action pour lequel un type a été sélectionné à l'étape 121, l'utilisateur ne pouvant, à ce stade, effectuer aucune autre opération de description sauf à sélectionner un élément graphique de la zone de description Z2.

A l'étape 120, l'assistant détecte si l'utilisateur clique sur l'élément d'interface BA. Dans l'affirmative, l'étape 121 est exécutée, sinon c'est l'étape 99 initiale qui est exécutée. On suppose ici que l'utilisateur clique sur l'élément d'interface BA.

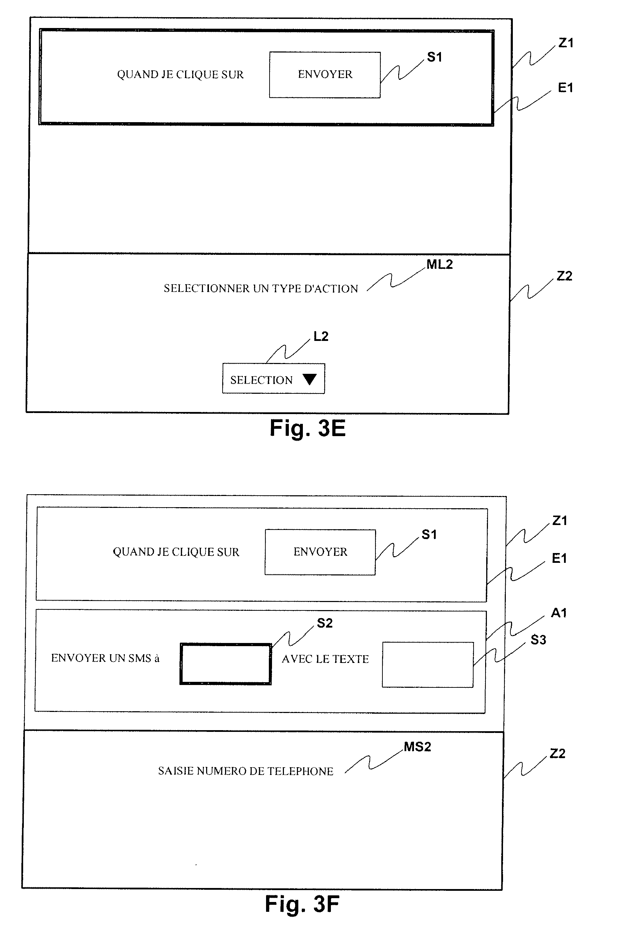

A l'étape 121, les zones Z1 et Z2 ont l'apparence représentée à la figure 3E: la zone de description E1 correspondant à l'événement défini précédemment est sélectionnée et la zone de commande Z2 comprend l'élément d'interface L2 de sélection d'un type d'action, accompagné d'un message ML2 pour inviter l'utilisateur à sélectionner un type d'action. Lors de cette étape 121, l'utilisateur doit donc choisir un type d'action et ne peut effectuer aucune autre opération de description. On suppose ici que l'utilisateur choisit lors de l'étape 121 une action du type "envoi d'un message SMS".

A l'étape 130, l'assistant détermine s'il reste à définir un paramètre pour l'action en cours de définition (celle dont le type a été sélectionné à l'étape 121). Dans l'affirmative, l'étape 131 est exécutée, sinon l'étape 135 est exécutée.

A l'étape 131, les zones Z1 et Z2 ont l'apparence représentée à la figure 3F: une zone de description A1 correspondant à l'action choisie à l'étape 121 est affichée dans la zone Z1, une zone de saisie S2 associée au premier paramètre de cette action étant sélectionnée (mise en relief avec un contour en trait plus épais). Ce premier paramètre étant destiné à recevoir un numéro de téléphone, la zone de commande Z2 comprend un message MS2 pour inviter l'utilisateur à saisir un numéro dans la zone de saisie S2.

A l'étape 132, l'utilisateur définit le premier paramètre sélectionné, en saisissant un numéro dans la zone de saisie S2.

L'assistant exécute à nouveau l'étape 130, et un deuxième paramètre devant être défini pour l'action en cours de définition, c'est l'étape 131 qui est exécutée suite à cette étape 130.

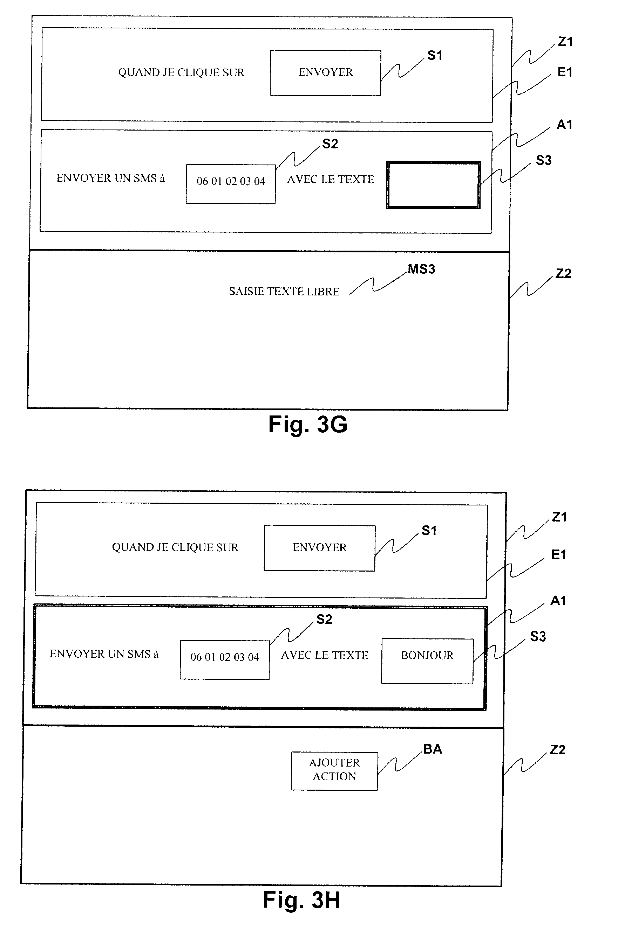

A l'étape 131, les zones Z1 et Z2 ont l'apparence représentée à la figure 3G: une zone de saisie S3 associée au deuxième paramètre de l'action en cours de définition étant sélectionnée (mise en relief avec un contour en trait plus épais). Ce deuxième paramètre étant destiné à recevoir un texte, composé librement par l'utilisateur, la zone de commande Z2 comprend un message MS3 pour inviter l'utilisateur à saisir un texte dans la zone de saisie S3.

A l'étape 132, l'utilisateur définit le deuxième paramètre sélectionné, en saisissant un texte dans la zone de saisie S3.

Puis l'assistant exécute à nouveau l'étape 130, et aucun autre paramètre ne devant être défini pour l'action en cours de définition, c'est l'étape 135 qui est exécutée suite à cette étape 130.

A l'étape 135, l'assistant sélectionne l'action qui vient d'être définie. Les zones Z1 et Z2 ont alors l'apparence représentée à la figure 3H: la zone de description E1 correspondant à l'action définie est mise en relief (affichée avec un contour en trait plus épais), la zone de commande Z2 comprenant un élément d'interface BA d'ajout d'action. L'opération de description suivante proposée à l'utilisateur est donc une opération de description d'une action, correspondant aux étapes 120 à 135. L'étape 120 est exécutée à nouveau, suite à l'étape 135.

Outre la succession prédéfinie d'opérations de définition qui vient d'être décrite, l'assistant offre différentes possibilités à l'utilisateur, pour modifier ou compléter la description existante:
- modification d'un paramètre d'un événement (respectivement d'une action): dans ce cas, l'utilisateur sélectionne à l'étape 113 (respectivement 133), la zone de saisie du paramètre à modifier; cette sélection peut s'effectuer à tout moment, notamment en cours de définition d'un événement ou d'une action, de manière par exemple à permettre à l'utilisateur de définir les paramètres d'un objet dans l'ordre qu'il le souhaite; l'étape 111 (respectivement 131) est exécutée suite à l'étape 113 (respectivement 133);
- ajout d'une action: dans ce cas, l'utilisateur sélectionne à l'étape 116 (respectivement 136) la zone de description de l'événement auquel rajouter une action associée (respectivement la zone de description de l'action suite à laquelle rajouter une action); l'étape 115 (respectivement 135) est exécutée suite à l'étape 116 (respectivement 136), l'assistant effectuant la sélection de la zone de description considérée et affichant dans la zone de commande Z2 un élément d'interface BA d'ajout d'action; l'opération de description imposée à l'utilisateur à ce stade est donc une opération de description d'une action, correspondant aux étapes 120 à 135 suivantes; optionnellement, un élément d'interface - non représenté - de suppression de l'action considérée est affiché simultanément à l'élément d'interface BA;
- ajout d'un événement: dans ce cas, l'utilisateur sélectionne la zone de description Z1 et l'assistant exécute l'étape 99: la zone de description Z1 est sélectionnée (mise en relief avec un contour en trait plus épais) et la zone de commande Z2 comprend un élément d'interface BE d'ajout d'un événement; l'opération de description imposée à ce stade à l'utilisateur est donc une opération de description d'un événement, correspondant aux étapes 100 à 115 suivantes; optionnellement, un élément d'interface - non représenté - de suppression de l'événement considéré est affiché simultanément à l'élément d'interface BE.

Cette invention a été décrite dans le cadre d'un outil de programmation de widgets. Elle cependant est applicable à la programmation, au moyen d'un langage graphique, d'un logiciel quelconque. Une application du principe de l'invention à une programmation en langage textuel est également envisageable.

## Revendications

1. Procédé d'aide à la programmation d'un logiciel comprenant
- une étape d'affichage d'une zone de description (Z1) utilisée pour afficher une description graphique d'au moins une action à exécuter par ledit logiciel suite à une occurrence d'au moins un événement,
- au moins une étape d'affichage, dans une zone de commande (Z2), d'au moins un élément d'interface (BE, BA, L1, L2, L3) au moyen duquel il est proposé à un utilisateur de procéder à une opération de description de ladite action ou dudit événement entraînant une mise à jour de ladite description graphique, l'opération de description couramment proposée étant chaque fois dépendante de la dernière opération de description effectuée, de manière à inciter l'utilisateur à définir ledit logiciel selon une succession prédéfinie d'opérations de description.

2. Procédé selon la revendication 1, dans lequel, en cas de détection d'une sélection d'un élément graphique effectuée par un utilisateur dans la zone de description, l'opération de description proposée est fonction de l'élément graphique sélectionné.

3. Procédé selon la revendication 1, dans lequel la zone de description comprend une zone de description de ladite action, l'opération de description proposée étant, lorsque la zone de description de ladite action est sélectionnée par un utilisateur, un ajout d'une action devant être exécutée avant ou après ladite action.

4. Procédé selon la revendication 1, dans lequel la zone de description comprend une zone de description dudit événement, l'opération de description proposée étant, lorsque la zone de description dudit événement est sélectionnée par un utilisateur, un ajout d'un autre événement ou un ajout d'une action associé audit événement.

5. Procédé selon la revendication 1, dans lequel l'opération de description couramment proposée est une opération de description ayant déjà été proposée à l'utilisateur mais n'ayant pas été effectuée par l'utilisateur.

6. Procédé selon la revendication 1 comprenant, lorsqu'un paramètre de ladite action ou dudit événement identifie un composant graphique d'une interface utilisateur dudit logiciel,
- une étape d'affichage, dans la zone de commande (Z2), d'au moins un élément d'interface à utiliser par un utilisateur pour sélectionner un composant graphique parmi une liste de composants graphiques;
- une étape d'affichage d'une zone de dessin (Z3) comprenant le composant graphique sélectionné.

7. Procédé selon la revendication 1 comprenant une étape de mise en oeuvre d'une fonction de validation de la description graphique afin de signaler à un utilisateur une omission telle que :
- l'absence d'événement dans ladite description graphique,
- l'absence d'action associée à un dit événement de ladite description graphique,
- l'absence d'un paramètre requis pour la définition d'une dite action ou un dit événement.

8. Procédé selon la revendication 1, dans lequel ledit logiciel est susceptible d'être décrit à partir d'objets représentant une dite action ou un dit événement, l'opération de description couramment proposée est l'une des opérations comprise dans le groupe comprenant:
- ajout d'un objet,
- choix d'un type d'objet pour un objet à créer,
- définition d'un paramètre pour un objet créé.

9. Procédé selon la revendication 5, dans lequel, lorsque l'opération de description couramment proposée consiste à choisir un type d'objet, une liste d'éléments d'interface utilisateur associés chacun à un type d'objet est affichée lors de l'étape d'affichage.

10. Support d'enregistrement lisible par un processeur de données sur lequel est enregistré un programme comprenant des instructions de code de programme pour l'exécution des étapes d'un procédé selon l'une des revendications 1 à 9.

11. Dispositif d'aide à la programmation d'un logiciel comprenant
- des moyens d'affichage d'une zone de description (Z1) utilisée pour afficher une description graphique d'au moins une action à exécuter par ledit logiciel suite à une occurrence d'au moins un événement,
- des moyens d'affichage, dans une zone de commande (Z2), d'au moins un élément d'interface (BE, BA, L1, L2, L3) au moyen duquel il est proposé à un utilisateur de procéder à une opération de description de ladite action ou dudit événement entraînant une mise à jour de ladite description graphique, l'opération de description couramment proposée étant chaque fois dépendante de la dernière opération de description effectuée, de manière à inciter l'utilisateur à définir ledit logiciel selon une succession prédéfinie d'opérations de description.
